Europäisches Patentamt

European Patent Office

Office européen des brevets

(11) Veröffentlichungsnummer: **0 306 704 B1**

(12) **EUROPÄISCHE PATENTSCHRIFT**

(45) Veröffentlichungstag der Patentschrift: **17.06.92**

(21) Anmeldenummer: **88112666.8**

(22) Anmeldetag: **04.08.88**

(51) Int. Cl.⁵: **H04N 5/44**

(54) Schaltungsanordnung für Fernsehempfänger zur störungsfreien Umschaltung von Fernsehkanälen.

(30) Priorität: **04.09.87 DE 3729599**

(43) Veröffentlichungstag der Anmeldung:
**15.03.89 Patentblatt 89/11**

(45) Bekanntmachung des Hinweises auf die
Patenterteilung:
**17.06.92 Patentblatt 92/25**

(84) Benannte Vertragsstaaten:
**AT BE CH DE ES FR GB GR IT LI LU NL SE**

(56) Entgegenhaltungen:
**GB-A- 1 533 372**

**PATENT ABSTRACTS OF JAPAN, Band 9, Nr.
169 (E-328)[1892], 13. Juli 1985, Seite 96 E
328; & JP-A-60 42 990**

**PATENT ABSTRACTS OF JAPAN, Band 9, Nr.
216 (E-340)[1939], 3. September 1985, Seite
37 E 340; & JP-A-60 75 178**

**PATENT ABSTRACTS OF JAPAN, Band 10,
Nr. 293 (E-443)[2349], 4. Oktober 1986, Seite
102 E 443; & JP-A-61 111 079**

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **Rufray, Jean-Claude
Hans-Thoma-Strasse 6
W-7734 Brigachtal(DE)**

## Beschreibung

Die Erfindung betrifft eine Schaltungsanordnung für Fernsehempfänger zur störungsfreien Umschaltung von einem Fernsehkanal auf einen anderen Fernsehkanal sowie mit einem Speicher zur Wiedergabe eines Standbildes.

Beim Umschalten von Signalquellen, die nicht aufeinander synchronisiert sind, wie z.B. bei der Umschaltung von Kanälen oder beim Umschalten auf einen Videorecorder, ist das wiedergegebene Bild im ersten Moment gestört, weit der Empfänger erst auf das neue Signal synchronisiert werden muß. Bis das Bild gefangen wird, vergehen oftmals einige hundert Millisekunden. Bei professionellen Geräten werden deshalb die umzuschaltenden Signale vor der Umschaltung aufeinander synchronisiert. Das erfordert jedoch einigen Schaltungsaufwand, der bei Heimempfängern nicht gerechtfertigt ist, so daß bei diesen die Störung beim Umschalten in Kauf genommen wird.

Der Erfindung liegt die Aufgabe zugrunde, die Umschaltung ohne großen Aufwand störungsfrei zu machen. Diese Aufgabe wird bei einer Schaltungsanordnung der eingangs genannten Art dadurch gelöst, daß eine Koinzidenzstufe vorgesehen ist, die aus dem Umschaltsignal und einem durch eine Impulsabtrennstufe abgeleiteten Bildsynchronimpuls ein Signal erzeugt, welches die Signalumschaltung und gleichzeitig das im Speicher gespeicherte Bild des zuvor empfangenen Kanals zur Wiedergabe freigibt, und daß eine Steuerschaltung vorgesehen ist, die durch das Signal aus der Koinzidenzstufe aktiv geschaltet wird und ein Signal erzugt, das für eine vorgebbare Zeitspanne das gespeicherte Bild zur Wiedergabe durchschaltet bis die Synchronisation auf das Signal des umgeschalteten Fernsehkanals erfolgt ist, wonach die Steuerschaltung die Wiedergabe des Signals des umgeschalteten Fernsehkanals ermöglicht.

Weitere Ausgestaltungen der Erfindung ergeben sich aus den abhängigen Ansprüchen.

Die Erfindung nutzt die Tatsache aus, daß es Fernsehempfänger gibt, die ein Standbild wiedergeben können, wozu sich im Empfänger ein Speicher befindet, der auf einen Befehl ein eingeschriebenes Bild statisch wiedergibt.

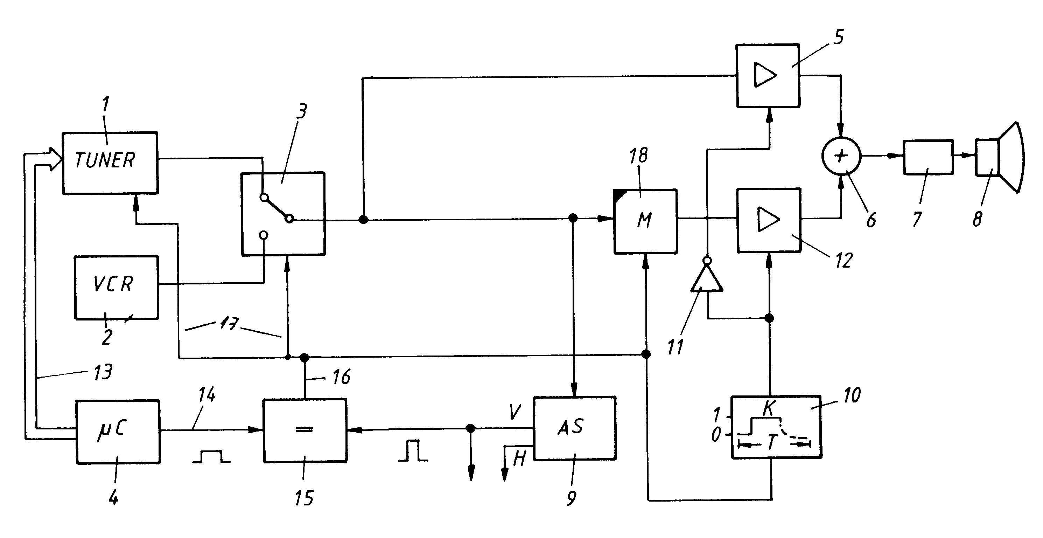

Nachstehend wird die Erfindung an einem Ausführungsbeispiel mit Hilfe der Zeichnung näher erläutert.

Die Figur stellt die wesentlichen Teile der Erfindung in einem Blockschaltbild dar. Die Signalquelle 1 stellt z.B. einen Tuner zum Empfang mehrerer Fernsehkanäle dar, bei der Signalquelle 2 handelt es sich um einen Videorecorder. Beide Signalquellen können über eine Schaltstufe 3 angewählt werden. Die Signalquelle 1 kann mit Hilfe eines Einstellbefehls aus einem Mikroprozessor 4 auf die, verschiedenen Fernsehkanäle umgeschaltet werden.

Es wird nun die Wirkungsweise der in der Zeichnung dargestellten Schaltung während der Umschaltung von einem Fernsehkanal auf einen anderen beschrieben. Der Tuner 1 sei auf einen bestimmten Fernsehkanal eingestellt. Das aus dem Tuner 1 kommende Zwischenfrequenzsignal gelangt über einen regelbaren Verstärker 5 und eine Addierstufe 6 an die Videosignalverarbeitungsstufe 7 und von dort an die Bildröhre 8. In einer Synchronsignalabtrennstufe 9 werden die horizontalfrequenten und vertikalfrequenten Synchronsignale H und V für die nicht weiter dargestellte Ablenkschaltung erzeugt. Eine Steuerschaltung 10 liefert über einen Inverter 11 ein Signal, das den Verstärker 5 durchschaltet und ein Signal, das gleichzeitig den Verstärker 12 sperrt. Sobald der Tuner 1 durch ein auf der Datenleitung 13 anliegendes, von dem Mikroprozessor geliefertes Signal auf einen anderen Fernsehkanal umgeschaltet wird, gelangt ein Umschaltsignal über die Leitung 14 an eine Koinzidenzstufe 15, die ein Signal auf die Leitung 16 abgibt, sobald ein Vertikalsynchronsignal aus der Synchronsignalabtrennstufe 9 anliegt. Die Koinzidenzstufe 15 gibt über die Leitung 17 die Umschaltung erst dann während des Vertikalrücklaufs des Bildes frei. Damit ist gewährleistet, daß ein vollständiges Bild des zuvor eingestellten Fernsehsignals in dem Speicher 18 abgespeichert wird. Das Signal auf der Leitung 16 sorgt gleichzeitig dafür, daß das momentan im Speicher 18 gespeicherte Bild festgehalten wird. Gleichzeitig schaltet die Steuerschaltung 10 ihr Signal derart um, daß der Verstärker 12 durchgeschaltet und der Verstärker 5 gesperrt wird. Die Umschaltung der Verstärkung der beiden Verstärker 5 und 12 bleibt so lange bestehen, bis der Empfang auf das umgeschaltete Signal synchronisiert ist. Nach einer vorgebbaren ZeitT, z.B. 100 Millisekunden, wird der Verstärker 5 wieder durchgeschaltet und der Verstärker 12 gesperrt. Auf diese Weise wird die sichtbare Störung eines noch nicht synchronisierten Bildes unterdrückt.

Die Umschaltung der Verstärkungsgrade mit Hilfe des Signals K kann abrupt von K = Null auf K = 1 erfolgen. Zwecks Umschaltung in Form einer weichen Überblendung kann das Signal K aber auch kontinuierlich gleitend ausgebildet sein.

## Patentansprüche

1. Schaltungsanordnung für Fernsehempfänger zur störungsfreien Umschaltung von einem Fernsehkanal auf einen anderen Fernsehkanal mit einem Bildspeicher zur Wiedergabe eines Standbildes, **dadurch gekennzeichnet,** daß eine Koinzidenzstufe (15) vorgesehen ist, die aus dem Umschaltsignal und einem durch eine Impulsabtrennstufe (9) abgeleiteten Bildsynchronimpuls ein Signal erzeugt, welches die Signalumschaltung und gleichzeitig das im Speicher (18) gespeicherte Bild des zuvor empfangenen Kanals zur Wiedergabe freigibt und daß eine Steuerschaltung (10) vorgesehen ist, die durch das Signal aus der Koinzidenzstufe (15) aktiv geschaltet wird und welche ein Signal erzeugt, das für eine vorgebbare Zeitspanne das gespeicherte Bildsignal zur Wiedergabe durchschaltet bis die Synchronisation auf das Signal des umgeschalteten Fernsehkanals erfolgt ist, wonach die Steuerschaltung (10) die Wiedergabe des Signals des umgeschalteten Fernsehkanals ermöglicht.

2. Schaltungsanordnung nach Anspruch 1, **dadurch gekennzeichnet,** daß die Steuerschaltung (10) die Umschaltung gleitend vornimmt.

3. Schaltungsanordnung nach Anspruch 1, **dadurch gekennzeichnet,** daß der Umschaltbefehl in Koinzidenz mit dem Vertikalrücklaufimpuls des vor der Umschaltung anliegenden Fernsehsignals ausgeführt wird.

## Claims

1. Circuit arrangement for television receivers for obtaining interference-free changing-over from one television channel to another television channel with a picture store for the reproduction of a still picture, characterised in that a coincidence stage (15) is provided, which from the change-over signal and a picture synchronising pulse derived from a pulse clipper (9) generates a signal, which enables the changing of the signal and simultaneously the release for reproduction of the picture, stored in the memory (18), of the previously received channel, and in that a control circuit (10) is provided which is activated by way of the signal from the coincidence stage (15) and which produces a signal which connects through the stored picture for reproduction for a given period of time, until the synchronisation to the signal of the television channel changed to has occurred, after which the control circuit (10) enables reproduction of the signal of the television channel changed to.

2. Circuit arrangement according to claim 1, characterised in that the control circuit (10) carries out the changing-over smoothly.

3. Circuit arrangement according to claim 1, characterised in that the changing-over command is carried out coincidentally with the vertical fly-back pulse of the television signal prevailing before the changing-over.

## Revendications

1. Dispositif de circuit pour récepteurs de télévision pour la commutation exempte de parasites d'un canal de télévision à un autre canal de télévision avec une mémoire d'images pour la reproduction d'une image immobile, **caractérisé en ce** qu'il est prévu un étage de coïncidence (15) qui, à partir du signal de commutation et d'une impulsion de synchronisation d'image dérivée par un limiteur d'impulsions (9), produit un signal qui libère la commutation du signal et simultanément l'image du canal qui vient d'être reçu, qui est mémorisée dans la mémoire (18), pour reproduction et qu'un circuit de commande (10) est prévu qui est commuté en devenant actif par le signal provenant de l'étage de coïncidence (15) et qui produit un signal qui commute l'image mémorisée pour reproduction pendant une période de temps qui peut être prédéterminée jusqu'à ce que la synchronisation sur le signal du canal de télévision commuté ait lieu, ce après quoi le circuit de commande (10) rend possible la reproduction du signal du canal de télévision commuté.

2. Dispositif de circuit selon la revendication 1, **caractérisé en ce** que le circuit de commande (10) effectue la commutation en glissant.

3. Dispositif de circuit selon la revendication 1, **caractérisé en ce** que l'ordre de commutation est effectué en coïncidence avec l'impulsion de retour de balayage vertical du signal de télévision qui est appliqué avant la commutation.

EP 0 306 704 B1